# EUROPEAN PATENT APPLICATION

(11) **EP 4 647 585 A1**
(43) Date of publication of application: **12.11.2025**
(21) Application number: 25169601.9
(22) Date of filing: 10.04.2025
(51) Int. Cl.: F01D 21/00, G01M 15/14

(54) **ENGINE HEALTH MONITORING**

(30) Priority: 10.05.2024 GB 202406534
(71) Applicant: Rolls-Royce plc, London N1 9FX (GB)
(72) Inventor: Mills, Andrew R, Derby, DE24 8BJ (GB); Hills, Andrew F, Derby, DE24 8BJ (GB); Sekaran, Paulas R, Derby, DE24 8BJ (GB); Naylor, Philip H, Derby, DE24 8BJ (GB); Jacobs, William R, Derby, DE24 8BJ (GB)
(74) Representative: Rolls-Royce plc

(57) **Abstract**

The disclosure relates to synchronising measurement data for engine health monitoring when using more than one engine health monitoring system. Example embodiments include a method of synchronising sensor data from first and second engine health monitoring, EHM, systems (11, 12) installed on an engine (10, 301), each EHM system (11, 12) having a plurality of sensors (202a-c) configured to measure parameters of the engine (10), the method comprising: acquiring first and second sensor data from the plurality of sensors (202a-c) at the first and second EHM systems (11, 12), the first sensor data including a measured engine speed; logging the first sensor data against a first time signal from the first EHM system and the second sensor data against a second time signal from the second EHM system; acquiring a synchronisation signal (316) from a synchronisation sensor (306) mounted to a part of the engine (301); deriving an engine speed from a frequency of the synchronisation signal (316); determining a timing difference between the first and second time signals from the derived engine speed and the measured engine speed; and adjusting the second time signal for the second sensor data to align the second sensor data in time with the first sensor data.

## Description

### TECHNICAL FIELD

The disclosure relates to synchronising measurement data for engine health monitoring when using more than one engine health monitoring system.

### BACKGROUND

Engine Health Monitoring (EHM) data is routinely used for gas turbine engines in service on aircraft. EHM data can reduce the need for unplanned maintenance by constantly monitoring engine parameters for detecting, and potentially resolving, certain types of issues before any disruption occurs, thereby enabling an engine to be kept safely in use. Permanent on-engine EHM equipment, including sensors and related data acquisition and processing equipment, adds weight and cost to an engine's bill of materials. Monitoring of certain types of parameters can be less necessary for more reliable engine components. Monitoring as many parameters as possible is therefore not typically proportionate or useful, as there are limits to how much EHM equipment can sensibly be fitted to every engine at new build. This means that, for certain emergent engine problems, there is a risk of having no relevant service flight data to help resolve the problem. Temporary fit sensing and data acquisition equipment, known as troubleshooting kits (or TSKs), offer the prospect of providing an additional agile EHM capability in the event of emergent service issues, without adding new build engine cost and weight. Such TSKs can be configured and installed to monitor additional engine parameters that are not monitored by a permanently installed EHM system.

A problem with data acquisition using a TSK is a lack of context for the acquired data. Information that is collected by a sensor needs to be linked to what the engine was doing at the time. Some way of synchronising measured data from a permanently installed EHM system and additional data from a TSK is therefore necessary. It may, however, not be possible or feasible to obtain a reliable common time stamp to synchronise data from a permanent EHM system with supplementary data from a TSK, resulting in data being possibly unsynchronised and therefore either less useful or potentially misleading.

### SUMMARY

According to a first aspect there is provided a method of synchronising sensor data from first and second engine health monitoring, EHM, systems installed on an engine, each EHM system having a plurality of sensors configured to measure parameters of the engine, the method comprising:
acquiring first and second sensor data from the plurality of sensors at the first and second EHM systems, the first sensor data including a measured engine speed;
logging the first sensor data against a first time signal from the first EHM system and the second sensor data against a second time signal from the second EHM system;
acquiring a synchronisation signal from a synchronisation sensor mounted to a part of the engine;
deriving an engine speed from a frequency of the synchronisation signal;
determining a timing difference between the first and second time signals from the derived engine speed and the measured engine speed; and
adjusting the second time signal for the second sensor data to align the second sensor data in time with the first sensor data.

The synchronisation sensor may be a vibration sensor physically attached to the engine.

The synchronisation sensor may be a non-contact sensor configured to measure vibration or movement of a part of the engine.

The engine speed may be derived by extracting a harmonic frequency from the synchronisation signal.

The harmonic frequency may be a fundamental frequency of the synchronisation signal.

Extracting the harmonic frequency from the synchronisation signal may comprise tracking an output of a notch filter and adjusting a frequency of the notch filter to maximise an energy of the output.

The method may comprise operating the second EHM system if an output of the synchronisation signal is above a threshold and disabling the second EHM system if the output of the synchronisation signal is below the threshold.

The second time signal may be adjusted to apply an offset to the second time signal to align the second sensor data with the first sensor data.

The second time signal may be adjusted to apply a time dilation to the second time signal to align the second sensor data with the first sensor data.

The first EHM system may be permanently mounted to the engine and the second EHM system temporarily mounted to the engine.

The first and second sensor data may include one or more of pressure and temperature from the engine.

According to a second aspect there is provided a system for monitoring an engine, the system comprising first and second engine health monitoring, EHM, systems installed on an engine, each EHM system having a plurality of sensors configured to measure parameters of the engine, the system configured to:
acquire first and second sensor data from the plurality of sensors at the first and second EHM systems, the first sensor data including a measured engine speed;
log the first sensor data against a first time signal from the first EHM systems and the second sensor data against a second time signal from the second EHM system;
acquire a synchronisation signal from a synchronisation sensor mounted to a part of the engine;
derive an engine speed from a frequency of the synchronisation signal;
determine a timing difference between the first and second time signals from the derived engine speed and the measured engine speed; and
adjust the second time signal for the second sensor data to align the second sensor data in time with the first sensor data.

The synchronisation sensor may be a vibration sensor physically attached to the engine.

The synchronisation sensor may be a non-contact sensor configured to measure vibration or movement of a part of the engine.

The second EHM system may be configured to derive the engine speed by extracting a harmonic frequency from the synchronisation signal.

The harmonic frequency may be a fundamental frequency of the synchronisation signal.

The second EHM system may be configured to extract the harmonic frequency from the synchronisation signal by tracking an output of a notch filter and adjusting a frequency of the notch filter to maximise an energy of the output.

The second EHM system may be configured to operate if an output of the synchronisation signal is above a threshold and to disable operation if the output of the synchronisation signal is below the threshold.

The system may be configured to adjust the second time signal to apply an offset to the second time signal to align the second sensor data with the first sensor data.

The system may be configured to adjust the second time signal to apply a time dilation to the second time signal to align the second sensor data with the first sensor data.

The first EHM system may be permanently mounted to the engine and the second EHM system temporarily mounted to the engine.

The first and second sensor data may include one or more of pressure and temperature from the engine.

According to a third aspect there is provided a gas turbine engine comprising a system for monitoring the engine according to the second aspect.

According to a fourth aspect there is provided a computer program comprising instructions for causing a computer-implemented system for monitoring an engine to perform the method according to the first aspect. The computer program may be provided on a non-transitory computer-readable medium.

According to a fifth aspect there is provided a non-transitory computer readable storage medium comprising computer readable instructions that, when read by a computer-implemented system for monitoring an engine, cause performance of the method according to the first aspect.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**Figure 1** is a schematic sectional diagram of a conventional gas turbine engine;
**Figure 2** is a schematic block diagram illustrating an example EHM system for the engine of Figure 1;
**Figure 3** is a schematic diagram illustrating functions relating to synchronising sensor data from first and second EHM systems;
**Figure 4** is a schematic diagram of a feature extraction process for a vibration signal from an engine;
**Figure 5** is a schematic plot of recorded parameters from first and second EHM systems with misaligned timestamps; and
**Figure 6** is a schematic flow diagram illustrating an example method of synchronising sensor data.

### DETAILED DESCRIPTION

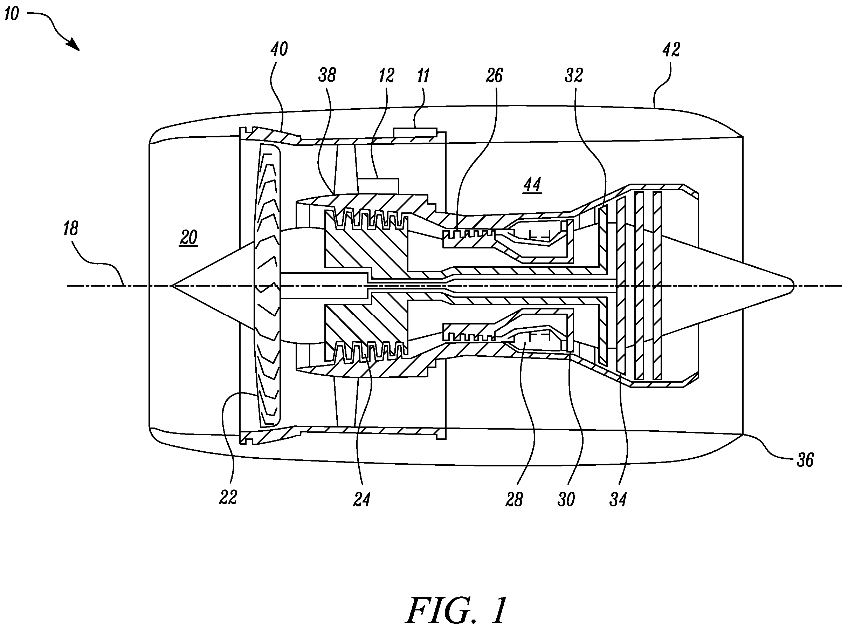

Figure 1 illustrated in schematic cross-section an example conventional gas turbine engine 10 on which first and second EHM systems 11, 12 are installed. The gas turbine engine 10 has a principal and rotational axis 18 and comprises, in axial flow series, an air intake 20, a propulsive fan 22, an intermediate pressure compressor 24, a high-pressure compressor 26, combustion equipment 28, a high-pressure turbine 30, an intermediate pressure turbine 32, a low-pressure turbine 34 and an exhaust nozzle 36.

The gas turbine engine 10 also includes a core casing 38 and a low-pressure compressor casing 40. The core casing 38 surrounds the intermediate pressure compressor 24, the high-pressure compressor 26, the combustion equipment 28, the high-pressure turbine 30, the intermediate pressure turbine 32 and the low-pressure turbine 34. The core casing 38 may be modular (that is, comprise several casing segments that connect to one another via fasteners to provide the core casing 38), or may be continuous and unitary. The low-pressure compressor casing 40 surrounds the fan 22, the low-pressure compressor 24 and at least a portion of the core casing 38. A nacelle 42 generally surrounds the engine 10 and defines both the intake 20 and the exhaust nozzle 36.

The gas turbine engine 10 operates so that air entering the intake 20 is accelerated by the fan 22 to produce two air flows: a first air flow into the intermediate pressure compressor 24 and a second air flow which passes through a bypass duct 44. The intermediate pressure compressor 24 compresses the air flow directed into it before delivering that air to the high-pressure compressor 26 where further compression takes place.

The compressed air exhausted from the high-pressure compressor 26 is directed into the combustion equipment 28 where it is mixed with fuel and the mixture combusted. The resultant hot combustion products then expand through, and thereby drive the high, intermediate, and low-pressure turbines 30, 32, 34 before being exhausted through the nozzle 36 to provide additional propulsive thrust. The high, intermediate, and low-pressure turbines 30, 32, 34 drive respectively the high-pressure compressor 26, intermediate pressure compressor 24 and fan 22, each by a suitable interconnecting shaft.

Other gas turbine engines to which the present disclosure may be applied may have alternative configurations. By way of example, such gas turbine engines may have an alternative number of interconnecting shafts (two, for example) and/or an alternative number of compressors and/or turbines. Further, such gas turbine engines may comprise a gearbox provided in the drive train from a turbine to a compressor and/or fan.

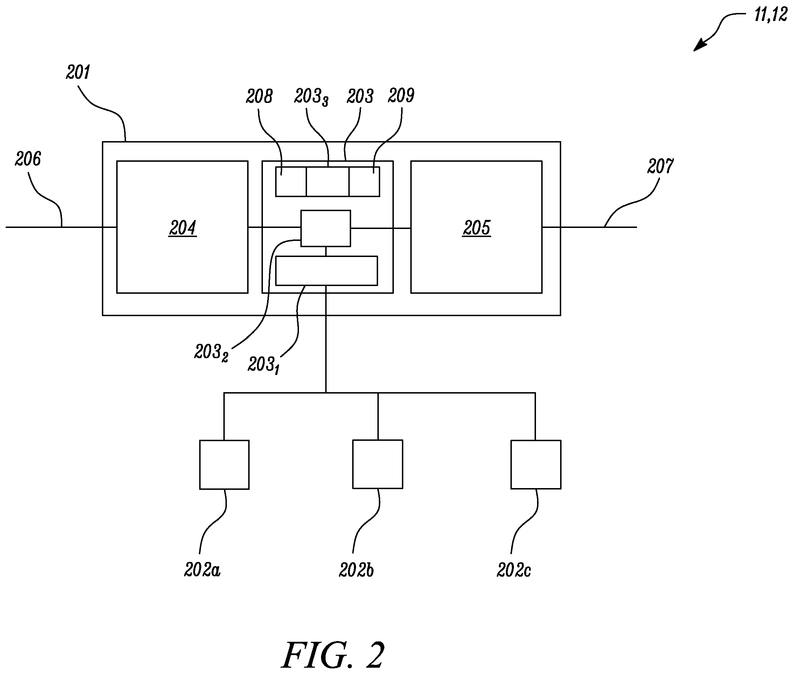

The first EHM system 11 is permanently installed on the engine 10, while the second EHM system 12 may be a temporary installation. A temporary installation may have fewer electrical and/or mechanical connections to the engine than a permanent installation and may consequently take less time to install and remove. In the example illustrated in Figure 1, the first EHM system 11 is mounted to the low-pressure compressor casing 40. The second EHM system 12 is installed on the core casing 38. Each of the EHM systems 11, 12 comprise in general terms an EHM module 201 connected to a plurality of sensors 202a-c, as illustrated schematically in simplified form in Figure 2. Sensor data from the sensors 202a-c may for example indicate pressure, temperature and speed information, among other things, which is acquired from various parts of the engine 10. These sensor data are received by a data acquisition module 203, which acquires and stores incoming data from the sensors 202a-c. The data acquisition module 203 may comprise a sensor interface 203₁ for receiving sensor data from the plurality of sensors 202a-c, a processor or CPU 203₂ for logging and processing the received sensor data and a memory 203₃ for storing the received and time stamped sensor data 209. The memory 203₃ may comprise a non-transitory computer-readable storage medium (such as a read-only memory, flash memory, solid state drive or hard drive) that stores a computer program 208 containing instructions for the processor 203₂ to operate the data acquisition module 203 to perform the methods described herein. A power module 204 provides electrical power to the data acquisition module 203. The power module 204 may derive power from an onboard electrical power source connected to the EHM module 201 via a power supply line 206 or may itself contain an internal power source such as a battery, particularly in the case of a temporary TSK. An alternative power source for a TSK may comprise a thermoelectric generator (TEG), which can be used if there is a sufficient thermal gradient available on the engine to extract power from. An input/output (I/O) interface 205 enables the acquired data to be transmitted from the EHM module 201 and other data or control signals to be transmitted to the EHM module 201. In the case of a permanently mounted EHM system, the I/O interface may transmit and receive data and control signals via a data cable 207 to and from a central computer system onboard the aircraft.

Both the first and second EHM systems 11, 12 may be configured to transmit acquired data for offboard analysis, either on a continual basis, at intervals or when accessed for extraction of acquired data.

When using a TSK to monitor parameters that are not configured to be captured by a permanently installed EHM system, there are certification advantages in keeping the temporary fit data capture equipment physically segregated from existing and permanently fitted control systems. However, the typically large number of parameters already collected by permanently fitted units are useful for contextualising data streams captured by temporary fit units. To be useful therefore, these two sources of data need to be aligned in time, but without violating the segregation principle.

Both the permanent fit (EEC - electronic engine control) and temporary fit (TSK) systems have sensors for measuring physical environment parameters but are located in physically different locations and are of different quantities. For example, the location of the TSK may mean that direct use of shaft speed sensors is not possible. To use these sensors for synchronisation requires placing a sensor in an appropriate location and extracting information from it that is directly comparable to permanent-fit unit data, for example on an Electronic Engine Control (EEC) unit or an Engine Vibration Health Monitoring Unit (EVHMU).

As described herein, feature extraction algorithms can be used to extract information from sensors for use in synchronising sensor data from different EHM systems. As an illustrative example, engine speed may be extracted from vibration measured on the engine, for example on the fan case. Such sensors may be used once the system under test is sufficiently active, for example once sufficient rotational speed has been reached. The use of physical sensor signals for data synchronisation may therefore allow for synchronisation of sensor data during or after the engine is operating.

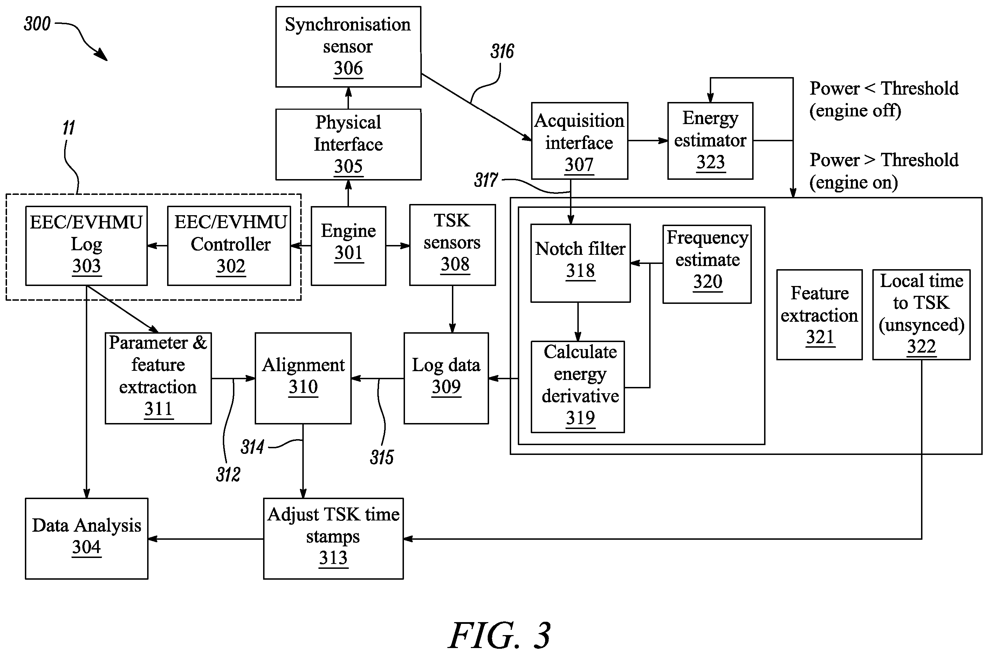

Figure 3 illustrates in functional block form an example system 300 for monitoring an engine, comprising an arrangement for synchronisation of data between first and second EHM systems, in which a first EHM system 11 is permanently mounted to an engine and a second EHM system is a TSK that is temporarily mounted to the engine. The first EHM system 11 is represented by blocks 301-305, which represent the engine 301, an EEC/EVHMU electronic controller 302, an EEC/EVHMU log 303, a data analysis module 304 and a characteristic physical interface 305, while the remaining blocks in Figure 3 represent various functions and physical features relating to synchronisation of data from a temporary fit TSK. The controller 302 and log 303 may be provided by the first EHM system 11 or may be divided between different systems onboard the aircraft. Data analysis 304 may be carried out remotely, for example at a ground-based server in communication with the aircraft, although some data analysis may be carried out by the first EHM system 11. The characteristic physical interface 305 may be a position on the engine 301 where a characteristic parameter can be measured that can be used to synchronise sensor data, such as a position where a characteristic vibration can be measured that corresponds to an engine speed.

A synchronisation sensor 306 is physically connected to the characteristic physical interface 305 of the engine 301 and measures a physical signal such as a vibration of the engine 301. The synchronisation sensor 306 may be a vibration sensor such as an accelerometer or acoustic sensor that is physically attached to the engine or may be a non-contact sensor such as an inductive or optical sensor configured to measure vibration or movement of a part of the engine. A signal 316 from the synchronisation sensor 306 is processed to extract a frequency signal that is characteristic of a speed of the engine 301. The frequency signal is logged with local TSK timestamps in block 309, which provides synchronisation signals 315. Post processing at block 310 aligns the communication events recorded by the TSK side-channel with EEC features 312 extracted at block 311 from parameters and features in the permanent fit communication log 303. TSK time stamps are adjusted at block 313, for example by applying an offset and dilation or scaling factor, to match those of the permanent fit electronics. This provides knowledge of when the EEC starts (thus Δ*t*(*0*))*,* and the rate at which Δ*t*(*k*) is changing. The time offset 314, together with any time dilation estimate, is provided by the alignment block 310 to the adjustment block 313 together with a local unsynchronised time signal 322 from the TSK. The TSK time stamps are then adjusted accordingly. The adjusted TSK time stamps are sent to block 304 for data analysis, which can analyse sensor data from both first and second EHM systems with aligned time signals. Data analysis 304 may be carried out remotely from the aircraft, for example at a ground-based location in communication with the EHM systems.

To avoid additional certification requirements, physical separation requirements may apply, so the operations carried out separate from the first EHM system 11 may be required to be non-invasive to the permanently installed EEC/EVHMU. This can be achieved through the use of the physical sensor 306 attached to the characteristic physical interface 305 of the engine 301. An output synchronisation signal 316 is provided to a data acquisition interface 307, which may comprise a DAC (digital to analogue converter) to convert the synchronisation signal 316 to a digital side channel data signal 317. The synchronisation signal 317 is provided to a notch filter 318, which is adjusted with a frequency estimate 320 according to a calculation of an energy derivative 319 output from the notch filter 318.

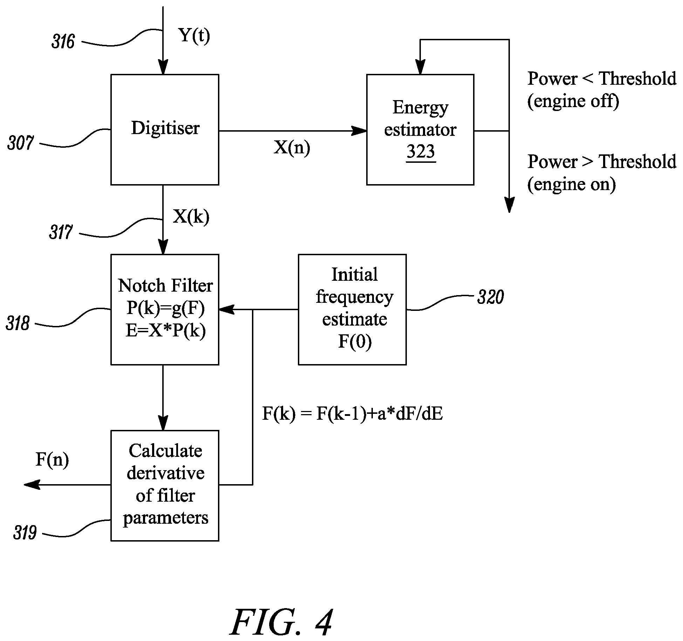

Figure 4 further illustrates the process of deriving an engine speed from blocks 307, 318, 319, 320, together with optional block 323 for operating or disabling the second EHM module. The synchronisation signal Y(t) 316 from the synchronisation sensor 306 is input to the acquisition interface 307, which digitises the signal 316 and outputs a digital synchronisation signal 317 to the notch filter 318. A sample window of the digitised synchronisation signal X of length K is represented as X(k) = [x(k-1), x(k-2) ... x(k-K)]=y(t) + e(t) for t belonging to a sample window of Ts * K seconds sampled at a period of Ts. The notch filter (of order K with parameter set P(k), and centre frequency F(k)) 318 is provided with an initial frequency estimate F(0) 320 and the energy in the filtered signal is output to block 319 every period Ts, which calculates a derivative of the filter parameters with respect to energy. The notch filter desired centre frequency is adjusted by adding the derivative dF/dE, scaled according to an update rate factor a, to the current frequency estimate F(k). The centre frequency F is used calculate filter parameter set P, through function g. The frequency estimate F(n) is output to be logged with the TSK sensor outputs (block 309, Figure 3), where n * m = k. The frequency output may be calculated at a slower rate than Ts (e.g. every m^{th} sample). An example disclosure of a type of adaptive notch filtering that may be used in the process illustrated in Figure 4 is provided by Gang Li, in "A stable and efficient adaptive notch filter for direct frequency estimation", IEEE Transactions on Signal Processing, vol. 45, no. 8, pp. 2001-2009, Aug. 1997.

The process illustrated in Figure 4 may estimate the fundamental frequency of the synchronisation signal 316 from a measurement of vibration using a set of known algorithms, an example being disclosed by Peeters et al, in "Review and comparison of tacholess instantaneous speed estimation methods on experimental vibration data", Mechanical Systems and Signal Processing, 129, 407-436, 2019. The maximum energy tracking algorithm periodically updates a centre frequency of the notch filter 318 to that of the fundamental frequency of the synchronisation signal. This estimate of frequency is a feature that can be mapped to an engine speed, which in the case of a gas turbine engine is the shaft speed. The synchronisation sensor should therefore be mounted where a strong vibration signal for the engine speed to be monitored is available.

Each of the features extracted by the feature extractor 321 of the TSK (the second EHM system) will need to have a comparable feature, with a time invariant relation, logged by the permanent fit equipment (the first EHM system). Feature extraction 321 can operate to reduce the amount of data that is logged by the second EHM system, thereby allowing more trouble-shooting measurand data to be stored. The logging operation 309 can also store timestamps from the second EHM system that are common to the synchronisation features and trouble-shooting measurand data.

Synchronisation features and measurands of interest are logged with a common time base to a memory location. Because the first EHM system also logs comparable data for synchronisation (for example engine speed), the features can be time aligned and the common time base with the measurands means these are also aligned.

The synchronisation features may be logged at a slower sample rate than the raw synchronisation data channel to allow a smaller amount of data to be stored. A log rate of around 10 Hz may typically be sufficient to log extracted features while a sampling rate of around 10 kHz or more may be needed to extract engine speed reliably.

At any future time, an external process (on- or off-board) then performs alignment on the relevant parameters recorded from the EEC 303 and the feature data logged in block 309.

The alignment process may, for example, involve an optimisation method to obtain time dilation and shift parameters that, when applied to the synchronisation features, minimise the difference to comparable EEC data derived features or parameters. The parameters used to perform this alignment can then be used to modify the time stamps of the trouble-shooting measurands and so that they align with full set of EEC data. The trouble shooting (temporary fit) sensors then have the same time base as the EEC.

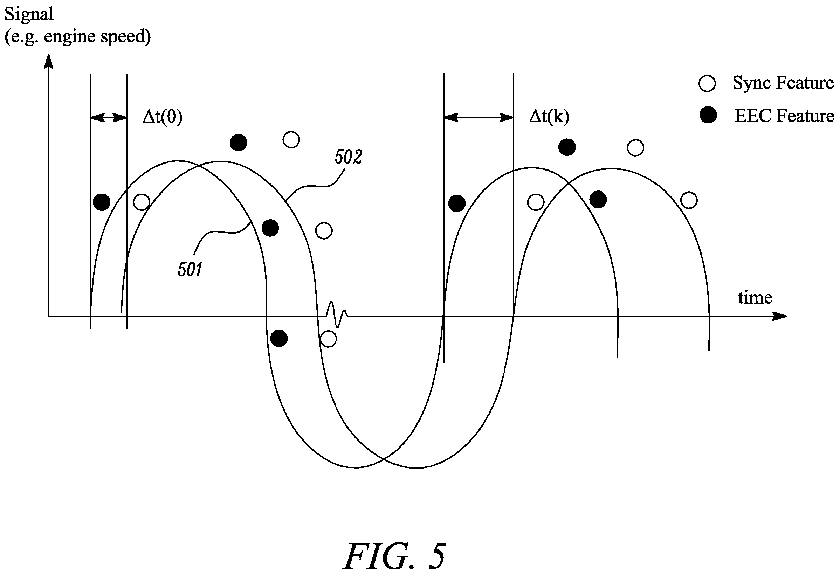

The process of synchronisation of features may calculate an offset Δ*t*(*0*) between the start times from the first and second EHM systems and a drift Δ*t*(*k*) at each future time period. First and second sensor data 501, 502 are illustrated schematically in Figure 5, together with corresponding data points, the first sensor data 501 from the first EHM system and the second sensor data 502 from the second EHM system. If the same signal, for example engine speed, is logged on both the first and second EHM systems, a time translation Δ*t*(*0*) and a time dilation Δ*t*(*k*) can be derived from the signals 501, 502 that results in any differences between the data, when normalised, being minimised. This is also likely difficult to capture the same EEC signals as these may be located in different physical locations. Therefore, in place of the TS Sync Parameter, a sync feature with a known mapping to the EEC feature is used for the alignment. Sync features do not need to have the same numerical value as recorded parameters but may be comparable to allow for minimising the difference between them via the time dilation and offset optimisation described above.

Block 323 in Figure 3 shows an additional capability obtained from the use of a synchronisation sensor, which is to monitor for activity indicating an engine on-state. This can be used for example to bring the TSK unit out of a power saving mode. The EHM system is maintained in a power saving mode if the energy estimator 323 determined that the engine is not powered, which may be defined by an output from the synchronisation sensor 306 being below a predetermined threshold. If the energy estimator 323 determines that the engine is powered, i.e. if the output from the synchronisation sensor 306 is above the threshold, the EHM system can be powered up. In a general aspect, the second EHM system may be operated if an output of the synchronisation signal is above a threshold and disabled if the output of the synchronisation signal is below the threshold.

The ability to synchronise sensor data can also be shared by a secondary data port to connect parallel data acquisition units (or service panels). This capability allows the synchronisation of one unit to be shared with others, thus enabling increased sensor coverage. Fully distributed consensus algorithms acting on synchronisation signals generated from multiple or a single master unit with back-up are two architecture options. The time adjusted local time from one unit can be broadcast to other units (e.g. over a communications bus). If it is the master unit then this time may be accepted by all units. Alternatively each unit could broadcast its own time and an average could be used. The known technique of 'Consensus Averaging' may be used to achieve this with a distributed system.

The method and system described herein may be applicable to various types of machinery and not only gas turbine engines for aircraft applications. The restrictions on physical separation of monitoring equipment makes the method more applicable to any regulated industry with operating safety considerations, such as transport, power generation and manufacturing.

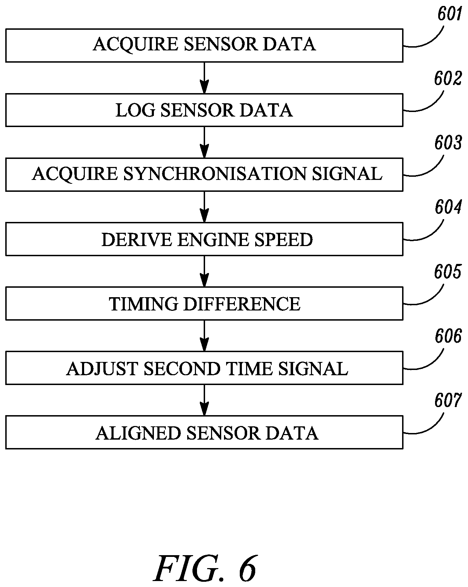

Figure 6 is a schematic flow diagram illustrating an example method of synchronising sensor data from first and second EHM systems in line with the above description. In a first step 601, sensor data is acquired from a plurality of sensors at the first and second EHM systems. Referring to Figure 3, the plurality of sensors include sensors installed on the engine 301, the TSK sensors 308 and the synchronisation sensor 306 connected by the physical interface 305 to the engine 301. The first sensor data includes a measured engine speed. In a second step 602, the first sensor data is logged against a first time signal from the first EHM system and the second sensor data against a second time signal from the second EHM system. In Figure 3, the first EHM system 11 the sensor data is logged by the EEC/EVHMU log 303 and the second sensor data is logged by the log data block 309. In a third step 603, a synchronisation signal (316 in Figure 3) is acquired from a synchronisation sensor (306 in Figure 3) mounted to a part of the engine (the physical interface 305 in Figure 3). In a fourth step 604, an engine speed is derived from a frequency of the synchronisation signal (blocks 318, 319 and 320 in Figures 3 and 4). In a fifth step 605, a timing difference is determined between the first and second time signals from the derived engine speed and the measured engine speed (alignment block 310 in Figure 3). In a sixth step 606, the second time signal is adjusted for the second sensor data to align in time with the first sensor data (adjustment block 313 in Figure 3). The aligned sensor data 607 may then be provided for analysis (data analysis block 304 in Figure 3) with the first and second sensor data on a common time series.

It will be understood that the patent application is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of synchronising sensor data from first and second engine health monitoring, EHM, systems (11, 12) installed on an engine (10, 301), each EHM system (11, 12) having a plurality of sensors (202a-c) configured to measure parameters of the engine (10), the method comprising:
acquiring first and second sensor data from the plurality of sensors (202a-c) at the first and second EHM systems (11, 12), the first sensor data including a measured engine speed;
logging the first sensor data against a first time signal from the first EHM system and the second sensor data against a second time signal from the second EHM system;
acquiring a synchronisation signal (316) from a synchronisation sensor (306) mounted to a part of the engine (301);
deriving an engine speed from a frequency of the synchronisation signal (316);
determining a timing difference between the first and second time signals from the derived engine speed and the measured engine speed; and
adjusting the second time signal for the second sensor data to align the second sensor data in time with the first sensor data.

2. The method of claim 1, wherein the engine speed is derived by extracting a harmonic frequency from the synchronisation signal (316).

3. The method of claim 2, wherein the harmonic frequency is a fundamental frequency of the synchronisation signal (316).

4. The method of claim 2 or claim 3, wherein extracting the harmonic frequency from the synchronisation signal comprises tracking an output of a notch filter and adjusting a frequency of the notch filter to maximise an energy of the output.

5. The method of any preceding claim comprising operating the second EHM system if an output of the synchronisation signal is above a threshold and disabling the second EHM system if the output of the synchronisation signal is below the threshold.

6. The method of any preceding claim, wherein the second time signal is adjusted to apply an offset to the second time signal to align the second sensor data with the first sensor data.

7. The method of any preceding claim, wherein the second time signal is adjusted to apply a time dilation to the second time signal to align the second sensor data with the first sensor data.

8. A system (300) for monitoring an engine, the system (300) comprising first and second engine health monitoring, EHM, systems (11, 12) installed on an engine (10), each EHM system (11, 12) having a plurality of sensors (202a-c) configured to measure parameters of the engine (10), the system configured to:
acquire first and second sensor data from the plurality of sensors (202a-c) at the first and second EHM systems (11, 12), the first sensor data including a measured engine speed;
log the first sensor data against a first time signal from the first EHM systems and the second sensor data against a second time signal from the second EHM system;
acquire a synchronisation signal (316) from a synchronisation sensor (306) mounted to a part of the engine (301);
derive an engine speed from a frequency of the synchronisation signal (316);
determine a timing difference between the first and second time signals from the derived engine speed and the measured engine speed; and
adjust the second time signal for the second sensor data to align the second sensor data in time with the first sensor data.

9. The system (300) of claim 8, wherein the synchronisation sensor (306) is a vibration sensor physically attached to the engine (301).

10. The system (300) of claim 8, wherein the synchronisation sensor (306) is a non-contact sensor configured to measure vibration or movement of a part of the engine (301).

11. The system (300) of any one of claims 8 to 10, wherein the second EHM system is configured to operate if an output of the synchronisation signal is above a threshold and to disable operation if the output of the synchronisation signal is below the threshold.

12. The system (300) of any one of claims 8 to 11, wherein the system (300) is configured to adjust the second time signal to apply an offset to the second time signal to align the second sensor data with the first sensor data.

13. The system (300) of any one of claims 8 to 12, wherein the system (300) is configured to adjust the second time signal to apply a time dilation to the second time signal to align the second sensor data with the first sensor data.

14. A gas turbine engine (10) comprising a system (300) for monitoring the engine (10) according to any one of claims 8 to 13.

15. A computer program (208) comprising instructions for causing a computer-implemented system (300) for monitoring an engine (10) to perform the method according to any one of claims 1 to 7.
